# EUROPEAN PATENT SPECIFICATION

(11) **EP 1 515 879 B1**
(45) Date of publication and mention of the grant of the patent: **14.02.2007**
(21) Application number: 03759880.2
(22) Date of filing: 13.06.2003
(51) Int. Cl.: B60R 25/08

(54) **ANTI-THEFT IMMOBILIZATION SYSTEM FOR TRUCKS AND/OR HANGERS**
DIEBSTAHLSCHUTZ-WEGFAHRSPERRSYSTEM FÜR LASTWAGEN UND/ODER ANHÄNGER
SYSTEME D'IMMOBILISATION ANTIVOL POUR CAMIONS ET/OU REMORQUES

(30) Priority: 13.06.2002 DK 200200892
(43) Date of publication of application: 23.03.2005
(73) Proprietor: I-Protect ApS, 6933 Kibaek (DK)
(72) Inventor: JEPSEN, Henrik, Dk-6100 Haderslev (DK); WILLATZEN, Per, DK-6520 Toftlund (DK); BARFOD, Jesper, Malm, DK-3120 Dronningmolle (DK)
(74) Representative: Inspicos A/S
(86) International application number: PCT/DK2003/000396
(87) International publication number: WO 2003/106232

(56) References cited:
- EP-A- 1 209 048
- US-A- 5 481 253
- US-A1- 2001 050 509
- DATABASE WPI Section PQ, Week 200240 Derwent Publications Ltd., London, GB; Class Q17, AN 2002-363406 XP002255053 & CN 1 181 329 A (AAA PLUS INT INC), 13 May 1998 (1998-05-13)

## Description

The increasing frequency of theft of trucks or trailers and robberies of trucks or trailers has prompted a large number of countermeasures.

Systems of this type may be seen in WO01/94130, US20010050509 (disclosing all features of the preamble of claim 1) and EP-A-0 792 783.

These measures are either lock systems of various kinds or systems, that utilizes a radio means to report to a base station the status of the vehicle and possibly also the position of the vehicle.

The position information may be based on satellite position systems like GPS, GLONASS or the upcoming European GALILEO system. The position may be derived from information of the closest mobile cell phone transceiver mast, or the information may be derived from kinetic information and digital map information e.g. from a cruise navigator system with or without the assistance of satellite position information.

Keys for locks may be stolen or robbed and hence facilitate stealing of a vehicle or trailer.

If a vehicle is stolen, information of its whereabouts is of course important for the recovery of the vehicle or trailer itself. However, unless the adverse movement of the vehicle or trailer is very quickly detected and very quickly responded to, the cargo of the truck or hanger may have long been removed.

The present invention describes a different approach for preventing theft of a truck or trailer/hanger.

### Description of the invention

Since the major part of road transportation vehicles consists of a separate engine and driving unit and one or more trailers, the present invention will in the following be described with this view. However the invention would apply equally well for trucks, where the cargo compartment and engine vehicle are not detachable, but are e.g. built on the same vehicle frame.

A first aspect of the invention relates to a system according to claim 1.

This aspect of the invention comprises physical means to immobilize a vehicle/trailer/hanger by interfering with the vehicles/trailers/hangers braking system and means for locking and unlocking the immobilization using alterable operator key codes and a verifications procedure.

All parts of the system are constructed to protect the system and its parts against unauthorized use and, at the same time, ensure that the safety of the vehicle, in particular while driving, is not jeopardized.

This aspect, in its preferred embodiment, applies to trailers with pneumatic brakes, but on other types of brake systems, other mechanical means like linear actuators may be used.

In a trailer with pneumatic brakes, physical immobilization is normally obtained by opening a valve, inserted in the trailers brake system, which removes air pressure on the brake activators and allows the built -in springs to activate the brakes.

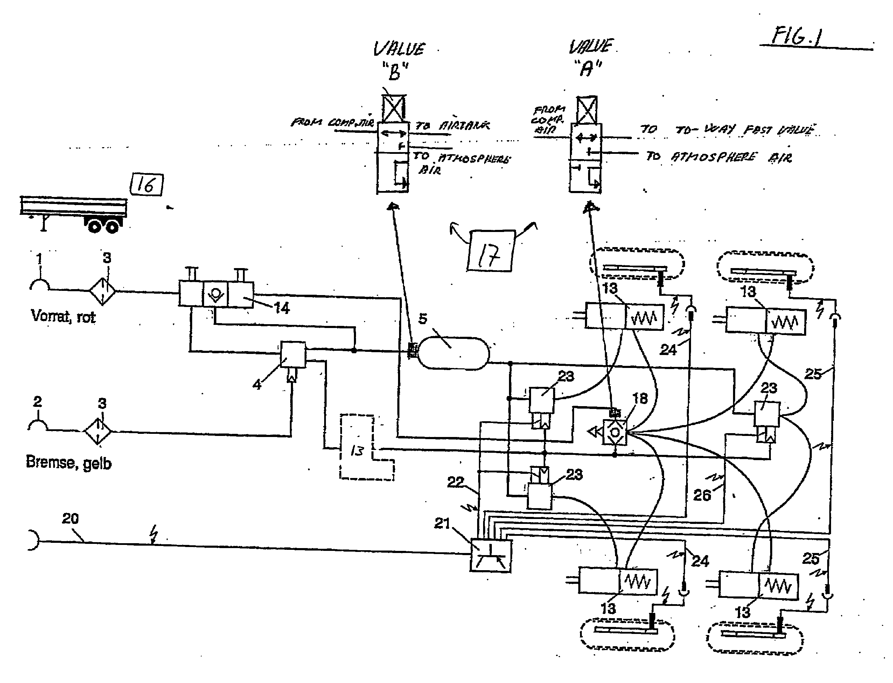

The valve is mounted such, that it does not release the pressure of the air reservoir, normally used for manual operation of the braking function, when the trailer is not connected to an air compressor, as indicated in fig 1, where the immobilization valve is labelled IV.

The valve is preferably mechanically fitted in such a way, that it is difficult and cumbersome to mechanically detach or occlude in a way that would destroy its immobilizing function.

One preferred way is to build the valve into the (steel) frame of the vehicle/trailer/hanger; another is to enclose the valve in a strong box of e.g. steel with many vents, which are not easily occluded.

Once the valve is open, the air pressure is removed from the brakes and the trailer cannot be moved. Enclosed with the valve is preferably an electronic interface that provides means for encrypting the control commands and hence avoid, that the valve may be operated by undue interference with the electrical interface.

The controlling means for the immobilization valve is, in the preferred embodiment, mounted in a tamper proof box of steel or a similar strong material with a number of keys and LED's for user interface and electrical connection for power supply to the trailers electrical system and electrical connection to the immobilization valve control electronics.

In another preferred embodiment, the feedback to the operator is substituted or supplemented by a numerical or alphanumerical display of know kinds like LED's or LCD and similar displays.

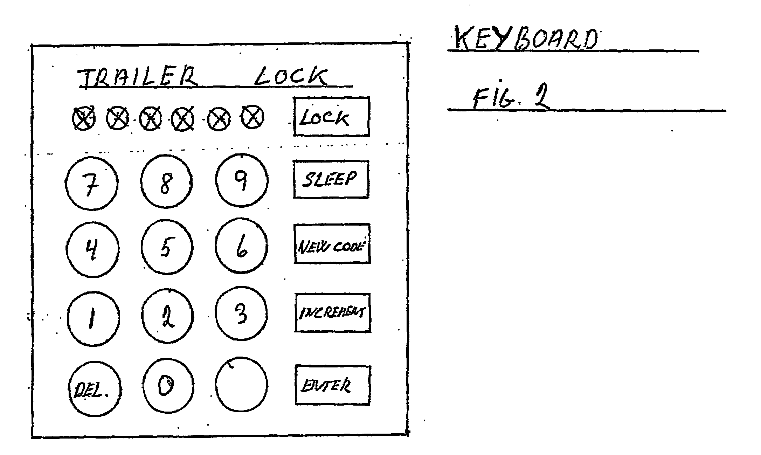

In the preferred embodiment and with reference to fig. 2, the following keys are available:
LOCK, designated LK
SLEEP, designated SL
NEW CODE, designated NC
INCREMENT key INC.
ENTER key EN
as well as a number of CODE ENTRY digit keys designated CE

To unlock the immobilization means, the operator preferably has to enter a sequence of code digits in the same way as PIN codes are used in context with GSM telephones and Credit Cards.

The number of digits and the number of values available for each digit may however differ from said examples.

The LED's and/or display means may signal the prominent status conditions of the immobilisation means to the operator.

In the preferred embodiment and with reference to fig 2 this status preferably is:
LOCKED: LED L1 is lit red
UNLOCKED: LED L1 is lit green
SLEEP: LED L2 is lit red; LEDL1 will also light up red.

When the LOCK button is pressed the immobilization means will, in this embodiment, activate the valve, and the brakes will brake. This condition will prevail until the correct key code is entered.

One embodiment comprises a SLEEP function being activatable by a SLEEP button whereby, when this button is hit, a number representing a number of hours may be entered using the INCREMENT key or by pressing the code keys or in other known ways for data entry on a keyboard and terminated with a hit on the ENTER key. The number of hours may be displayed by flashing the number of stored sleep hours on one of the LED's it may be shown temporarily on a numerical display or displayed by other known means. When a sleep period is entered the immobilization locks and the trailers brakes cannot be released by entering the key code until the period expires.

The immobilizer control means in the preferred embodiment is further equipped with an electrical alarm input circuit, which may be activated by various known alarm means including an alarm button operated by the driver in case of attack or intrusion, by commonly known intrusion sensors or by PIR sensors that detects the motion of persons in the vehicles vicinity.

In order to prevent adverse activation of the immobilization brakes during driving, the immobilization controller may be equipped with input from a speed or acceleration sensor, which, when activated prevents the locking of the brakes as long as the vehicle is in motion. The speed sensing means could be a tacho sensing means detecting wheel motion, a pattern recognizing sensor detection motion of the road surface texture, including a vision sensor, a GPS receiver, or a kinetic sensor e. g. an accelerometer or other known means for detecting speed.

If the alarm circuit has been activated while the immobilization means has been locked or if the driver wants to interrupt a sleep period, the immobilization controller may request a new key code to unlock the immobilizer. To accomplish this, or if the driver has forgotten the present key code or for other reasons wants a new key code, a new key code may, in the preferred embodiment, be obtained using an unpredictable procedure that can be carried out remotely e.g. using telephones or remote data transmission and which involves a verification procedure which to a very high degree ensures the identity of the immobilization means for which the new code should be applied as well as the identity and integrity of the driver who is requesting a new key code. The identification is preferably accomplished using means known from remotely activated intruder alarms, e.g. voice verification, code words or the like, or means based on biometric identity measures and related sensors. The use of tangible identity means like ID cards with machine readable codes or ordinary or electronic keys could also be used, but are not recommended, since these are easily stolen and misused.

In voice based verification, the identity of the driver is normally readily established if the responding person of the trusted party knows the drivers voice, or if automatic voice recognition is used. In other cases, when biometric identification is not used the identity must be established using code words or passwords, which are subject to adverse copying and misuse and hence should be renewed frequently as it is commonly known for identity verification based on code words and passwords.

To signal to the trusted party, whether the verification is part of an unthreatened procedure or whether the driver is subject to attack or force while performing the verification, at least two code words or passwords, known by both parties may be used, one for the normal situation and one for the threatened situation.

Following identity verification based on the known passwords or code words, the new key code unlocking the immobilization controller means and generated by the unpredictable procedure described below may be different depending on the codeword or password used and by means of the logic in the immobilization controller may produce different action in order to protect the driver and cargo in case the procedure has been carried out in a threatened situation.

The action generated as the result of the forced request and generation of a new key code in a threatened situation is, in the preferred implementation, that the immobilization system is unlocked and the brakes are released as if a normal UNLOCK took place, however at a given time, e.g. a few minutes after the motion sensor detects motion and enough time for the driver to escape after the vehicle or trailer is presumably stolen, the immobilization means will flash the brake lights, assert a warning rotating flash lamp, sound audible alarms, or emit similar alarming signals an/or issue emergency calls on a concealed radio device and slowly apply the brakes to provoke an entire stop and cease to unlock until a renewed new code generation is applied, this time using a more rigorous generation and delivery procedure, possibly including the personal presence of a trusted person and the intervention of police personnel.

The presence of a truck tracking device using e.g. a GPS/GSM combination will facilitate locating the stolen vehicle.

To further delay a possible theft of a trailer, which have been parked without the trucking engine section connected, an additional valve may be optionally implemented in the pneumatic system and which, when activated will completely empty the pressurized air reservoir and thereby delay any movement by at least the time it takes to refill the reservoir.

Conditions that will activate this valve could be the presence of an alarm signal on the alarm input, multiple, say 3, attempts to enter an incorrect key code or other un-normal conditions.

Preferred embodiments of the invention will hereafter be described with reference to the accompanying drawing wherein:
Fig. 1 illustrates a braking system according to the invention, and
Fig. 2 illustrates a keyboard for the system of Fig. 1.

### Detailed description of the invention.

Fig. 1 illustrates a standard braking system for a trailer, where the positions of additional valves are indicated for obtaining the present advantages.

The standard braking system comprises the two standard connections from the trailer to the tractor (yellow and red pressurized air cords 1 and 2, respectively), a pressurized air tank 5 receiving pressurized air from the cord 1 via a valve 14.

The pressurized air providing cord 1 provides pressurized air to the tank 5 via a valve 14. When the driver wishes to brake the trailer, pressurized air is provided to the cord 2, where after, via a valve 4, a signal is transmitted, via a fast valve 18 to the brakes 13 of the trailer.

The other components (13, 20-26) relate to the standard ABS and ALB systems of the trailer - systems which are not relevant in this connection.

In order to prevent theft of the trailer, one or more additional valves are provided for maintaining the breaking of the trailer, when an attempt is made to move it. One position is illustrated by the Valve A, where an input to the breaking valve 18 is maintained open so that when pressurized air is provided from the valve 4, this will not open the breaks 13.

Another position is one at the other end of the valve 18 whereby the pressurized air is simply prevented from reaching the valve 18.

Yet another position is illustrated at Valve B, whereby pressurized air from the tank 5 is prevented from entering the tank 5. In this manner, when the tank 5 is vented after parking, removal will require an attempt to again pressurize the tank 5.

Another position would be at the output side of the tank 5.

Some of these positions may present problems when loosing pressurized air or the like to the trailer during authorized movement, whereby additional safety systems may be required for some embodiments in order to prevent accidents during normal use.

Fig. 2 illustrates a keyboard which may be used to communicate, via a controlling means 17 controlling the system of Fig. 1 (optionally with sensors 16 (inside or outside the trailer)).

### Unpredictable code generation.

The way to generate an unpredictable new key code is in the preferred implementation of the invention, by using an encryption technique, where every new key code generated is the result of firstly producing an unpredictable number, called a seed number, from the controlling means requiring the new key code, secondly applying this seed number to a secret algorithm, which is known to both the key code producing party and the controlling means requiring the key code and resulting in a new key code, which is unpredictable from the seed number in all practical aspects, and thirdly using this new key code to unlock the immobilization controlling means.

Since the controlling means has knowledge of both the unpredictable seed number delivered and to the secret algorithm, the controlling means will itself generate its internal copy of the new key code, which will allow it to unlock, in case the key code is recognized.

By using two or more different secret algorithms on the same unpredictable seed number, two or more key codes may be recognized and may produce different logic operations in the immobilization controller depending on the key code entered.

In the preferred embodiment of the invention, the secret algorithm used is one of the class of algorithms named pseudorandom generators, but other algorithms like commonly known encryption algorithms having the property of generating, in an unpredictable way, which is very difficult to reverse engineer, a new number in a predetermined number range, say 16 bits, from an input number in the same or another predetermined number range, may be used for the purpose of this invention.

Several secret algorithms may easily be generated by firstly carrying out a binary exclusive OR operation on the seed number with different codes in the same number range as the seed number, or by other means known from number theory and encryption theory.

Similarly, the secret algorithms in each immobilization means may be made different by using different sets of codes for the exclusive or operation.

In the preferred embodiment, the unpredictable seed number is produced by a binary or decimal counter of suitable bit length clocked by an imprecise clock source, e.g. an RC clock, but any other means of producing unpredictable numbers in response to an event, e.g. a key press are applicable.

Good pseudorandom generators using many different number ranges may be found in the mathematical literature.

### Detailed description of valve operation.

To prevent adverse control of the immobilization valve, the valve is controlled electronically in such a way, that removal of electric connection or power to the valve will make the valve take a well defined position.

In the preferred embodiment, when any electrical connection is lost or tampered with, this valves position will be the last one set by the controlling system and reapplying power will not change this position until the valve is instructed thereto, preferably by an encrypted message from the keyboard.

In another preferred embodiment, the valve would open and the brakes of the trailer would brake, when the electrical conditions are not correct, whereby the trailer will be prevented from being moved under these circumstances. This embodiment would, however, brake the trailer if electric power was accidentally lost, which may be against some countries regulatory specifications.

In order to operate the immobilization valve, the electrical control signals are not simple high or low voltage levels or other simple electrical signalling, which could be simple to replicate by an intruder.

Rather, the signals consist of many information bits, transmitted from the electronic means controlling the valve in a fashion known from electronic information transfer, it be serially or in parallel.

To further protect the control of the valve from adverse operation by an intruder knowledgeable of electronics, the control information is in the preferred embodiment encrypted in a way similar to the one used when generating new key codes, but this time by communication between the controlling means and the controlled immobilization means and without identity and integrity verification procedure.

In the preferred embodiment of this invention, the secret algorithms used are embedded in tamper protected and read protected firmware of both the controlling and the controlled device.

The scheme requires a bidirectional data communication between the controlling and the controlled immobilization means.

The commanding controller means issues a command to be executed if verification is approved, and receives, as a first step in the verification procedure, an unpredictable number from the commanded immobilization means.

This number may be the instant value of a counter clocked by an imprecise time base like an RC clock in the commanded immobilization means.

The unpredictable number transmitted is used as a seed for the common secret pseudorandom algorithm, and the result is saved for later reference by the commanded immobilization means.

The controlling means uses the same number as the seed for the same secret pseudorandom algorithm and produces the same resulting number. This number is now transmitted to the commanded immobilization means, which will compare it to the internally generated version of the number and execute the command, if the numbers are identical.

Thus, an observer would experience, that the same command would contain different patterns of bits in the verification procedure, and he would thus not be able to carry through a verification procedure without knowing the algorithm or recording substantial parts of the input/output numbers of the algorithm and then use this as a look-up table to produce the correct verification code to the commanded device.

In order to counteract the latter situation, the commanded device has, in the preferred embodiment, a built-in timer set to a time that may span from a few seconds to many minutes. The timer is started after a number, say 3 attempts to unlock the immobilization and does not allow a new attempt until the timer expires. Hence mapping the input/output numbers of the secret pseudorandom generator could take many years.

To further prevent the use of such a mapping, the pseudorandom generator algorithms are made different from immobilization means to immobilization means.

In the preferred embodiment, this is implemented by XOR'ing a binary codeword of the appropriate range onto the seed before the resulting number is used in a subsequent common good pseudorandom algorithm. By choosing different binary words for each immobilization means, not two means will exhibit the same input/output number map.

If the controlling means for the immobilization system described in this invention is used with many trailers, it may be located in the trucking engine section. In order to allow the controller to command the immobilizing valves, the enabling codeword of the immobilizing valves secret algorithm should be entered into the controller.

This could be done manually, but better protection is accomplished by using machine readable codes like magnet stripes, bar codes, smart cards with or without encryption algorithms, Code button, e.g. from Dallas semiconductors, or RFID (radio frequency ID) devices or anything similar.

The communication between the controlling means and the electronics of the immobilization valve may not only be a direct electrical connection using wires, but may be all other means of data communication, using wireless means, including all electromagnetic radiation such as radio waves and light waves as well communication using particles or bursts of particles.

The electrically operated devices and the electronic circuits may receive power from the vehicles electric system, but application of batteries enclosed in the tamperproof enclosures and charged by the vehicles electric system or by separate generators including solar panels, fuel cells mechanical generators attached to the wheels of the trailer or truck may also be used according to this invention.

The remote voice or data communication may be all known means of communicating using voice or data including fixed wires, radio links, mobile cell phones with or without data modems, digital radio systems for mobile purposes like TETRA, dedicated mobile radio systems or the like.

## Claims

1. A system for immobilizing vehicles and/or trailers/hangers comprising:
- an electrically operated tamper protected immobilization means (A, B), which mechanically interferes with a braking system (5,13,18) of the vehicles/trailers/hangers in order to lock it in a braked position and
- a tamper protected controlling means (17) for operating and controlling the immobilization means (A,B), the controlling means (17) being adapted to require the entry of a key code for unlocking the immobilization
a connection between the controlling means (17) and the immobilization means (A,B) is tamper protected either by mechanical means using steel enclosures or by an encrypted electrical protocol executed on the electrical connection between the controlling means (17) and the immobilization means (A,B),
the system being adapted to be configured with a new key code at an operators demand,
the system being **characterized in** being adapted to provide a procedure for generating a new key code, which involves the generation of an unpredictable number and the existence of a secret algorithm for producing a new key code which algorithm is known to the controlling means and a trusted party which produce a new key code based on the unpredictable number.

2. A system according to claim 1, the system being adapted to, on the basis of two or more algorithms performed on the same unpredictable seed number, recognize two or more key codes and produce different logic operations in the controlling means depending on the key code entered.

3. A system according to claim 1, **characterized in that** the controlling means are adapted to be put into a sleep mode preventing any unlocking for a period of time, which is also entered into the controlling means.

4. A system according to claim 1, **characterized in that** the generation of a new key code from a trusted party is preceded by a verification procedure for the requesting person.

5. A system according to claim 1, **characterized in that** the generation of a new key code from a trusted party is preceded by a verification procedure for the means for which the new key code is being applied.

6. A system according to claim 1, **characterized in that** a variety of new key codes can be generated by the trusted party for a given requestor and vehicle, where the code actually given depends on the requestors choice of one among a predetermined set of secret code words shared between the driver of the vehicle and the trusted party.

7. A system according to claim 6, **characterized in that** the controlling means may react differently in a predetermined way to the reception of one of a variety of key codes.

8. A system according to 1, **characterized in that** the immobilization means is adapted to take its locked position when an external signal is provided to the controlling means.

9. A system according to claim 8, **characterized in** being adapted to have an activated state of a motion sensor prevent the immobilization until the sensor is no longer active, in which case the immobilization lock is activated.

10. A system according claim 8 or 9, **characterized in that** the lock mode may only be released by entering a new key code.

11. A system according to claim 3, **characterized in that** the sleep mode may be interrupted by entering a new key code.

12. A system according to claim 7, **characterized in that** one reaction to a key code input may be to activate auditive and/or visual alarms on the vehicle using existing signalling means or additional alarm means with or without delay depending or not depending on the state of a motion detector input to the controlling means.

13. A system according to claim 1, **characterized in that** the immobilization interference means comprises a pneumatic valve adapted to remove pressure form the brake release pneumatic cylinders.

14. A system according to claim 1, **characterized in that** the immobilization means comprises mechanical actuators adapted to interfere with a non-pneumatic mechanical brake system.

15. A system according to claim 1, **characterized in that** the system is pneumatic and is equipped with an additional valve which, when activated, releases the compressed air from the brake systems air reservoir.

## Patentansprüche

1. System zum Blockieren von Fahrzeugen und/oder Anhängern/Hängevorrichtungen, umfassend:
- elektrisch betriebene gegen unbefugte Manipulation geschützte Blockierungsmittel (A, B), welche mechanisch in ein Bremssystem (5, 13, 18) der Fahrzeuge/Anhänger/Hängevorrichtungen eingreifen, um es in einer gebremsten Stellung zu verriegeln, und
- gegen unbefugte Manipulation geschützte Steuermittel (17), um die Blockierungsmittel (A, B) zu betreiben und zu steuern, wobei die Steuermittel (17) derart ausgestaltet sind, dass sie die Eingabe eines Tastencodes erfordern, um die Blockade zu entriegeln,
wobei eine Verbindung zwischen den Steuermitteln (17) und den Blockierungsmitteln (A, B) entweder durch mechanische Mittel unter Verwendung von einer Stahleinfassung oder durch ein verschlüsseltes elektrisches Protokoll, welches auf der elektrischen Verbindung zwischen den Steuermitteln (17) und den Blockierungsmitteln (A, B) ausgeführt wird, gegen eine unbefugte Manipulation geschützt ist,
wobei das System derart ausgestaltet ist, dass es bei einer Nachfrage einer Bedienperson mit einem neuen Tastencode konfiguriert wird,
wobei das System **dadurch gekennzeichnet ist, dass** es derart ausgestaltet ist, dass es ein Verfahren bereitstellt, um einen neuen Tastencode zu erzeugen, welches die Erzeugung einer unvorhersagbaren Zahl und das Vorhandensein eines geheimen Algorithmus umfasst, um einen neuen Tastencode zu erzeugen, wobei der Algorithmus den Steuermitteln und einer vertrauenswürdigen Seite bekannt ist, welche einen neuen Tastencode auf der Grundlage der vorhersagbaren Zahl erzeugen.

2. System nach Anspruch 1, wobei das System derart ausgestaltet ist, dass es auf der Grundlage von zwei oder mehr Algorithmen, welche auf derselben unvorhersagbaren Startzahl ausgeführt werden, zwei oder mehr Tastencodes erkennt und verschiedene Logikoperationen abhängig von dem eingegebenen Tastencode in den Steuermitteln erzeugt.

3. System nach Anspruch 1, **dadurch gekennzeichnet, dass** die Steuermittel derart ausgestaltet sind, dass sie in einen Schlafmodus versetzt werden, welcher ein Entriegeln für eine Zeitperiode verhindert, welche auch in die Steuermittel eingegeben wird.

4. System nach Anspruch 1, **dadurch gekennzeichnet, dass** der Erzeugung eines neuen Tastencodes von einer vertrauenswürdigen Seite ein Verifikationsverfahren für die anfordernde Person vorausgeht.

5. System nach Anspruch 1, **dadurch gekennzeichnet, dass** der Erzeugung eines neuen Tastencodes von einer vertrauenswürdigen Seite ein Verifikationsverfahren für die Mittel vorausgeht, für welche der neue Tastencode anzuwenden ist.

6. System nach Anspruch 1, **dadurch gekennzeichnet, dass** eine Vielzahl von neuen Tastencodes für einen vorgegebenen Anfordernden und für ein Fahrzeug durch die vertrauenswürdige Seite erzeugt werden kann, wobei der Code, welcher tatsächlich vergeben wird, von der Wahl des Anfordernden aus einem vorbestimmten Satz von geheimen Codeworten abhängt, welche zwischen dem Fahrer des Fahrzeugs und der vertrauenswürdigen Seite verteilt sind.

7. System nach Anspruch 6, **dadurch gekennzeichnet, dass** die Steuermittel in einer vorbestimmten Weise unterschiedlich auf die Aufnahme eines aus einer Vielzahl von Tastencodes reagieren können.

8. System nach Anspruch 1, **dadurch gekennzeichnet, dass** die Blockierungsmittel derart ausgestaltet sind, dass sie eine verriegelte Stellung annehmen, wenn ein äußeres Signal den Steuermitteln bereitgestellt wird.

9. System nach Anspruch 8, **dadurch gekennzeichnet, dass** es derart ausgestaltet ist, dass es einen aktivierten Zustand eines Bewegungssensors aufweist, welcher die Blockade verhindert, bis der Sensor nicht länger aktiv ist, wobei in diesem Fall die Blockierungsverriegelung aktiviert wird.

10. System nach Anspruch 8 oder 9, **dadurch gekennzeichnet, dass** der Verriegelungsmodus nur entriegelt werden kann, indem ein neuer Tastencode eingegeben wird.

11. System nach Anspruch 3, **dadurch gekennzeichnet, dass** der Schlafmodus unterbrochen werden kann, indem ein neuer Tastencode eingegeben wird.

12. System nach Anspruch 7, **dadurch gekennzeichnet, dass** eine Reaktion auf eine Eingabe eines Tastencodes sein kann, einen hörbaren und/oder sichtbaren Alarm bei dem Fahrzeug zu aktivieren, wobei vorhandene Signalisierungsmittel oder zusätzliche Alarmmittel mit oder ohne eine Verzögerung abhängig oder nicht abhängig von dem Zustand eines Bewegungsmelders, welcher den Steuermitteln zugeführt ist, verwendet werden.

13. System nach Anspruch 1, **dadurch gekennzeichnet, dass** die Blockierungseingriffsmittel ein pneumatisches Ventil umfassen, welches derart ausgestaltet ist, dass es einen Druck von den pneumatischen Zylindern zur Lösung einer Bremse abbaut.

14. System nach Anspruch 1, **dadurch gekennzeichnet, dass** die Blockierungsmittel mechanische Betätigungsmittel umfassen, welche derart ausgestaltet sind, dass sie in ein nicht pneumatisches mechanisches Bremssystem eingreifen.

15. System nach Anspruch 1, **dadurch gekennzeichnet, dass** das System pneumatisch ist und mit einem zusätzlichen Ventil ausgestaltet ist, welches, wenn es aktiviert wird, die komprimierte Luft von dem Luftvorratsbehälter des Bremssystems freisetzt.

## Revendications

1. Système pour immobiliser des véhicules et/ou des remorques/semi-remorques comprenant :
un moyen d'immobilisation inviolable actionné électriquement (A, B), qui interagit mécaniquement avec un système de freinage (5, 13, 18) des véhicules/remorques/semi-remorques afin de le verrouiller dans une position de frein et
un moyen de commande inviolable (17) pour actionner et commander le moyen d'immobilisation (A, B), le moyen de commande (17) étant adapté pour nécessiter l'entrée d'un code clé pour déverrouiller l'immobilisation
un raccord entre le moyen de commande (17) et le moyen d'immobilisation (A, B) est rendu inviolable soit par un moyen mécanique utilisant des protections en acier ou des moyens similaires ou par un protocole électrique codé exécuté sur le raccord électrique entre le moyen de commande (17) et le moyen d'immobilisation (A, B),
le système étant adapté pour être configuré avec un nouveau code clé selon une demande d'un opérateur,
le système étant **caractérisé en ce qu'**il est adapté pour fournir une procédure pour générer un nouveau code clé, qui implique la génération d'un nombre imprévisible et l'existence d'un algorithme secret pour fournir un nouveau code clé l'algorithme étant connu du moyen de commande et d'une partie fiable et produisant un nouveau code clé basé sur le nombre imprévisible.

2. Système selon la revendication 1, le système étant adapté pour, sur la base de deux ou plus algorithmes réalisés sur le même nombre racine imprévisible, reconnaître deux ou plusieurs codes clés et produire des opérations logiques différentes dans le moyen de commande selon le code clé entré.

3. Système selon la revendication 1, **caractérisé en ce que** le moyen de commande est adapté à être mis en un mode sommeil empêchant tout déverrouillage pendant une période de temps, qui est aussi entrée dans le moyen de commande.

4. Système selon la revendication 1, **caractérisé en ce que** la génération d'un nouveau code clé par une partie fiable est précédée par une procédure de vérification de la personne requérante.

5. Système selon la revendication 1, **caractérisé en ce que** la génération d'un nouveau code clé par une partie fiable est précédée par une procédure de vérification du moyen pour lequel le nouveau code clé est appliqué.

6. Système selon la revendication 1, **caractérisé en ce qu'**une variété de nouveaux codes clés peuvent être générés par la partie fiable pour un requérant et un véhicule donnés, où le code effectivement donné dépend du choix du requérant de l'un parmi un ensemble prédéterminé de mots de codes secrets partagés entre le conducteur du véhicule et la partie fiable.

7. Système selon la revendication 6, **caractérisé en ce que** le moyen de commande peut réagir différemment d'un façon prédéterminée à la réception de l'un de la variété des codes clés.

8. Système selon la revendication 1, **caractérisé en ce que** le moyen d'immobilisation est adapté pour prendre sa fonction verrouillée quand un signal extérieur est fourni au moyen de commande.

9. Système selon la revendication 8, **caractérisé en ce qu'**il est adapté pour avoir un état activé d'un détecteur de mouvement empêchant l'immobilisation jusqu'à ce que le détecteur ne soit plus actif, dans lequel cas le verrou d'immobilisation est activé.

10. Système selon la revendication 8 ou 9, **caractérisé en ce que** le mode verrouillage est seulement libéré en entrant un nouveau code clé.

11. Système selon la revendication 3, **caractérisé en ce que** le mode sommeil est interrompu en entrant un nouveau code clé.

12. Système selon la revendication 7, **caractérisé en ce qu'**une réaction à un code clé entré est d'activer des alarmes sonores et/ou visuelles sur le véhicule en utilisant le moyen de signalisation existant ou un moyen d'alarme additionnel avec ou sans retard dépendant ou ne dépendant pas de l'état d'une entrée du détecteur de mouvement au moyen de commande.

13. Système selon la revendication 1, **caractérisé en ce que** le moyen d'interaction d'immobilisation comprend une vanne pneumatique adaptée pour éliminer la pression des cylindres pneumatiques de libération de frein.

14. Système selon la revendication 1, **caractérisé en ce que** le moyen d'immobilisation comprend des actionneurs mécaniques adaptés pour interagir avec un système de freinage mécanique non pneumatique.

15. Système selon la revendication 1, **caractérisé en ce que** le système est pneumatique et est muni d'une vanne additionnelle qui, quand elle est activée, libère l'air comprimé provenant du réservoir d'air des systèmes de freinage.
